# EUROPEAN PATENT SPECIFICATION

(11) **EP 2 107 625 B1**
(45) Date of publication and mention of the grant of the patent: **14.11.2012**
(21) Application number: 08425226.1
(22) Date of filing: 04.04.2008
(51) Int. Cl.: H01M 2/40, H01M 10/06, H01M 10/42, H01M 10/50

(54) **Plant for cooling and retitration of conductive solutions**
Anlage zur Kühlung und Retritation von leitenden Lösungen
Installation pour refroidissement et retitrage de solutions conductrices

(43) Date of publication of application: 07.10.2009
(73) Proprietor: Sovema S.p.A., 37069 Villafranca (VR) (IT)
(72) Inventor: Farina, Pietro, 37069 Villafranca (VR) (IT)
(74) Representative: Gallo, Luca

(56) References cited:
- EP-A- 0 476 916
- DE-A1- 3 529 726
- JP-A- 7 045 302
- US-A- 3 166 447
- US-A- 5 135 820
- US-A1- 2008 016 680

## Description

The present invention relates to a plant for the cooling and re-titration of conductive solutions, in particular conductive electrolytic solutions for lead-acid batteries. The term re-titration as used below is deemed to mean the process comprising the control and correction of a conductive electrolytic solution for batteries by adjustment of the acid-water concentration.

The industry for the production of lead-acid batteries, in particular batteries for vehicles, comprises an operational step which is carried out after assembling the elements which make up the batteries and filling the batteries with a solution conductive of electricity, the so-called electrolyte: this step comprises the supply of electricity to the batteries, provided by an energy source, such as, for example, a conventional electricity distribution network, to enable the charging of the elements which form the batteries, with adequate Volt and Ampere values, and to make them ready for marketing.

This charging step has been carried out in prior art in various ways, as it causes an increase in the temperature of the conductive solution which contains an acid component, in particular sulphuric acid, during the supply of electricity by the power supply source.

According to a first method, the charge is obtained by connecting a plurality of batteries in series and supplying them with the required quantities of energy for the charging for programmed periods of time.

This first method is carried out "in air", simply by placing the batteries on special roller benches and adjusting the current intensities, so that the charge takes place slowly, thereby maintaining the temperature of the conductive solution within a predetermined value, in order not to damage the elements forming the batteries.

According to another method, in order to maintain the temperature of the conductive solutions of the batteries low, the batteries, as in the previous case, are connected in series and then' placed inside cooling vessels containing a cooling liquid, normally water.

According to yet another method, in order to maintain the temperature of the conductive solutions of the batteries low, a circuit is created for the exchange of the conductive solutions from the batteries during charging, extracting them from the batteries and sending them to a cooling circuit and then returning them again to the batteries.

In the cooling circuit, the conductive solutions, that is the electrolyte containing the sulphuric acid diluted with water, first undergo a filtration step and then a step of checking the sulphuric acid concentration.

Since the sulphuric acid concentration must remain substantially constant in terms of absolute values, the solutions which normally contain a higher concentration of this acid due to the chemical transformations which develop in the electrolyte during charging, are treated to dilute this concentration by introducing calibrated doses of solvent liquid, in the specific case water, until reaching the desired concentration values.

At the end, the treated solutions are cooled to a pre-established temperature and reintroduced into the cycle to fill the batteries during charging.

This circulation of conductive solutions is activated by means of pumps installed on the cooling circuit.

In practice, the conductive solutions containing the sulphuric acid are placed inside special storage and supply vessels, normally inside two vessels which contain, respectively, low density sulphuric acid, used to supply the batteries being charged, and high density sulphuric acid used for the final charging of the batteries.

From these vessels, the conductive solutions, which are substantially cold, are supplied to the batteries under charge, inside of which there are already conductive solutions which are progressively heating up due to the charging process.

The cold solutions force the hot solutions to flow out from the batteries and these hot conductive solutions are collected in additional storage vessels installed for this purpose. These storage vessels are normally located underground and from these vessels the hot conductive solutions collected are pumped by a pump to a filtering device to remove any impurities collected during battery charging.

After the filtration, the conductive solutions are collected in additional storage vessels and from there pumped again to a vessel fitted with a cooling system and special inlets to introduce water or sulphuric acid in order to modify the concentrations of water or sulphuric acid in the conductive solutions collected.

These additional storage vessels may also be fitted with mixing devices to improve the mixing between the conductive solutions collected and the quantities of water and/or sulphuric acid introduced through the inlets to correct the concentration values of the conductive solutions collected and to change them to the desired values.

A reading device fitted to these additional storage vessels enables the concentration values to be gradually checked as the doses of water or sulphuric acid are introduced, until the desired concentration and temperature values are reached.

At this point, the cooled solutions with the pre-established concentrations are again sent to the storage and supply vessels to keep the circulation active.

The prior art has several shortcomings.

A first shortcoming is that, in the case of batteries charged "in air", that is without the installation of any specific cooling system, the charging periods are very long, in the order of approximately 120 hours.

This requires the setting up of large areas for the installation of an adequate number of backup systems for the batteries being charged simultaneously.

Another shortcoming is that in the case of batteries charged whilst immersed in a cooling liquid, the charging periods, even though they are considerably shorter, are still quite long, in the order of 80 hours.

In addition, in this case, the need to use cooling vessels results in dripping during the handling of the batteries and the loss of part of the cooling liquid from these vessels, producing a surrounding environment which is unsafe and very damp for the handling personnel.

Another shortcoming caused by the cooling of the conductive solutions is that the conductive solutions require constant monitoring by the operators, as it is not possible to maintain the sulphuric acid concentration values substantially constant, since when a large number of batteries with different structural characteristics are simultaneously charged, the sulphuric acid concentrations differ greatly over a large range of values.

This requires the manual intervention by operators who every time modify the values of water or sulphuric acid to be introduced during the step of correcting the concentrations to bring the concentration values within the desired values so that the solutions may be re-introduced in the battery charging cycle.

Yet another shortcoming, still concerning the method of cooling the conductive solutions, is that the plants are considerably complex and costly and, above all, are not able to operate in a fully automatic manner.

Document US3166447 describes an apparatus for forming with an acid electrolyte the electrode plates placed into a housing of a single battery. The electrode plates of the storage battery are readily formed by removing a portion of the circulating electrolyte through an outlet, diluting it with water, cooling it, and then introducing it again through an inlet.

Document US 5135820 describes an apparatus for the automatic recirculation of battery electrolyte from industrial and similar batteries employing a vacuum system to remove electrolyte solution from a cell of the battery, transfer it to a central location where it can be treated, and then return it to the battery for its continued use. The treatment of the electrolyte solution comprises many form of electrolyte treatment, including temperature adjustment, filtering, and removal of excess gases. Document DE 3529726 describes an apparatus able to modify the energy density of a lead-acid battery having electrodes with electrolyte flowing through them. The apparatus provides that an amount of electrolyte is fed to the battery from a reservoir by means of a pump, which, based on the active mass, is required for the current to be expected under practical discharge conditions. The flow is regulated in such a way that the concentration of the acid discharged from the electrodes remains approximately constant. To this end, a concentration sensor immersed in the acid discharge signals its measured values to a regulator which controls the inflow rate by means of an inlet valve.

Document JP 7045302 describes an apparatus for increasing cooling efficiency during formation of batteries having electrolyte injection paths for injecting electrolyte into cells and electrolyte suction paths for drawing out electrolyte from the cells. The electrolyte injection paths and the electrolyte suction paths are so disposed that electrolyte drawn out from a cell is injected into an adjoining cell, thereby flowing electrolyte in turns through plural cells. At the beginning, the electrolyte is circulated between a formation electrolyte storage tank and each cell of the battery. Then, in the latter half of formation, electrolyte is circulated between a specific gravity adjusting electrolyte storage tank and each cell of the battery.

Document EP 0476916 describes an aluminum-silver oxide battery system able to efficiently discharges at a low power density and at a higher power density of more than ten times the low power density. The battery system has a battery stack of cells. Each cell has an aluminum anode and a silver oxide cathode, both of which are disposed in an aqueous alkaline electrolyte solution. The solution has a hydroxyl concentration of between about 0.1 M and 1 M when the system operates at low power and then has a hydroxyl concentration of at least about 3 M when the system operates at a higher power of more than about ten times the low power density. At this aim a reservoir containing alkaline electrolyte is in flow communication with the aqueous alkaline electrolyte solution in the system. An injection valve operatively connected with the reservoir injects alkaline electrolyte into the aqueous alkaline electrolyte solution.

The above mentioned prior art documents does not consider the problem to improve the efficiency of correction means employed for forming the batteries, in particular a different number of batteries has to be treated.

One aim of the present invention is to improve the prior art.

Another aim of the present invention is to provide a plant for the cooling and the re-titration of conductive solutions, in particular conductive solutions for lead-acid batteries, which enables the batteries to be maintained at a desired temperature while they are being charged and to shorten the length of time for charging.

A further aim of the present invention is to provide a plant for the cooling and re-titration of conductive solutions, in particular conductive solutions for lead-acid batteries, which enables batteries to be charged whilst maintaining the charging environment substantially safe and healthy for the operators.

The present invention provides a plant for the cooling and the re-titration of conductive solutions according to claim 1.

The plant for the cooling and the re-titration of conductive solutions, in particular conductive solutions for lead-acid batteries, consequently enables the batteries to be charged quickly, maintaining the temperatures of the conductive solutions within the desired range of values, such that the elements which make up the batteries are not damaged.

Further characteristics and advantages of the present invention are more apparent in the description of a preferred embodiment of a plant that implements a method for the cooling of conductive solutions, in particular conductive solutions for lead-acid batteries, with reference to the accompanying drawings, which are provided merely by way of example without restricting the scope of the inventive concept, and in which:
Figure 1 is a schematic view of a plant for the cooling and the re-titration of conductive solutions, in particular conductive solutions for lead-acid batteries, according to prior art;
Figure 2 is a schematic view of a plant for the cooling and the re-titration of conductive solutions, in particular conductive solutions for lead-acid batteries, implementing the method for the cooling and the re-titration of conductive solutions according to the present invention.

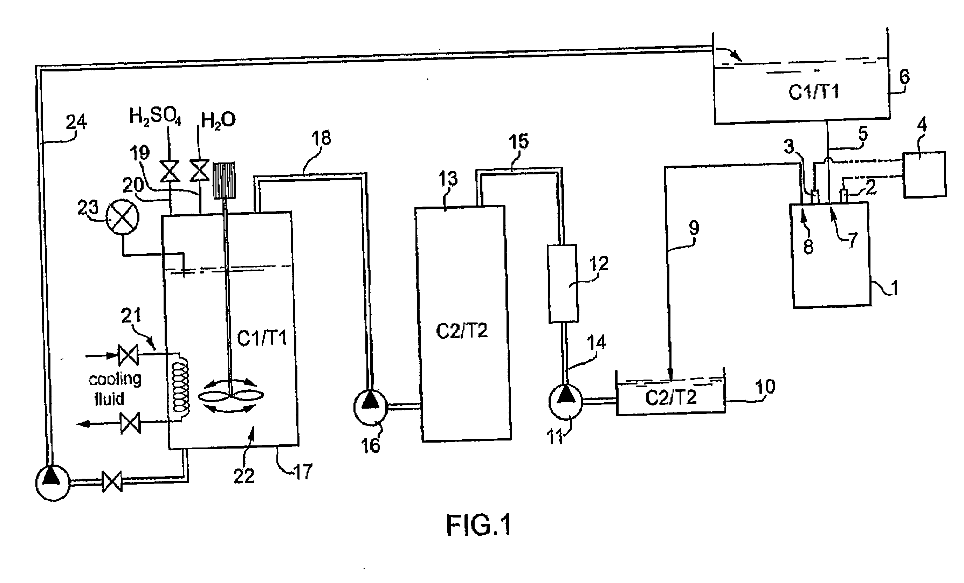

With reference to Figure 1 which, as mentioned, shows a more pertinent example of prior art, the numeral 1 schematically indicates a lead-acid battery, such as, for example, a battery for a vehicle, which has two terminals 2 and 3 connected to a source of electricity 4, such as, for example, an electricity distribution network, for charging the battery.

Battery 1 is connected, through an inlet duct 7, to a first pipe 5 for-connection to a storage vessel 6 that contains conductive solutions which have a first concentration of sulphuric acid, conventionally indicated below as "C1", and which are substantially cold, for example at a temperature conventionally indicated below as "T1". In the same manner, a quantity of conductive solution substantially equal to a quantity introduced through the inlet duct 7 is extracted from an outlet duct 8 of the battery 1.

The outlet duct 8 is connected, by a second pipe 9, to a second vessel 10 for storing the quantities of conductive solution extracted through the outlet duct 8.

These extracted quantities have a second concentration conventionally indicated below as "C2" which is different from the first concentration "C1", normally greater than "C1", due to the chemical reactions which occur in the conductive solutions inside the battery 1 while it is being charged, and which heat the conductive solutions to a temperature conventionally indicated below as "T2".

From the second storage vessel 10, the conductive solutions having concentrations "C2" are pumped by a first pump 11, to a filtration unit 12 through a pipe 14 and then to a third storage vessel 13 through a pipe 15.

From this storage vessel 13 a second pump 16 draws the conductive solutions which still have a concentration "C2" and sends them to a correction device 17, through a pipe 18.

The correction device 17 is installed to correct the concentration "C2", bringing it substantially equal to the concentration value "C1" previously indicated.

To do this, according to prior art, calibrated volumes of water or sulphuric acid may be introduced into the correction device 17 through the inlets 19 and 20 installed for this purpose, in order to modify the concentrations "C2" of sulphuric acid.

At the correction device 17 a cooling device 21 is active which cools the conductive solutions and brings them again to the temperature "T1". Optionally, a mixer device 22 is fitted to the correction device 17 which uniformly mixes the conductive solutions with the calibrated volumes of water or sulphuric acid introduced in the correction device through the inlets 19 and 20. When the temperature and the concentration of sulphuric acid in the conductive solutions has reached the desired values, read, for example, with a measuring instrumen indicated schematically with the numeral 23, the conductive solutions are again sent to the storage vessel 6 through a pipe 24 and, from this, they are again introduced into the cooling cycle.

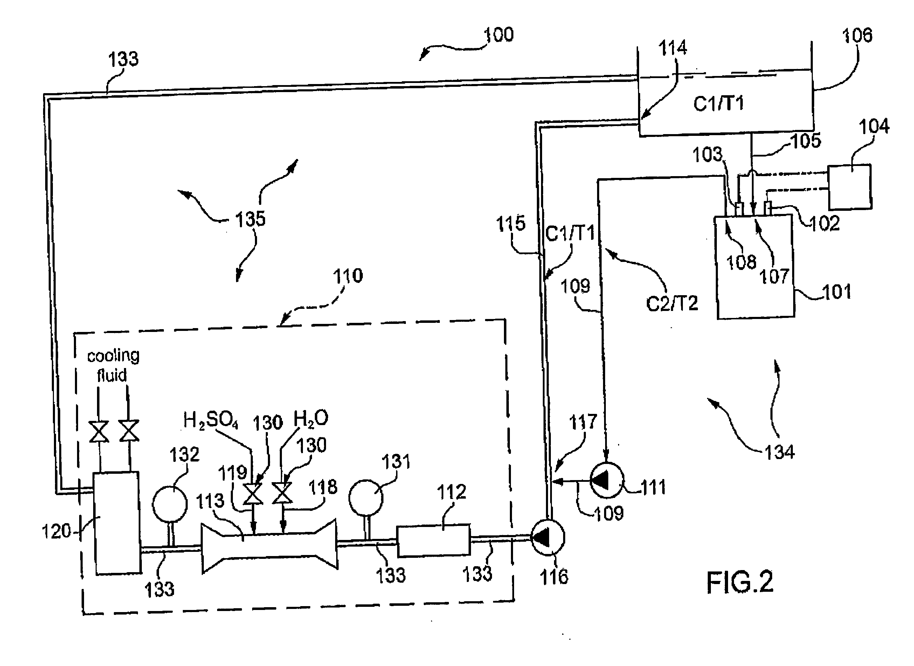

With references to Figure 2 which shows a plant that implements a method for the cooling and the re-titration of conductive solutions, in particular conductive solutions of lead-acid batteries, according to the present invention, it may be seen that the plant 100 comprises at least one storage vessel 106 containing quantities of conductive solutions which have, for example, the same first concentration "C1" of sulphuric acid previously mentioned and that have a substantially cold temperature indicated again, for simplicity, as "T1".

The storage vessel 106 discharges, for example by gravity, through a first pipe 105, a first flow formed by quantities of conductive solutions into a lead-acid battery 101 being charged, (or in many batteries being charged as indicated in the following), which has two terminals 102 and 103 which are schematically connected to a source of electricity, such as, for example, a domestic or industrial distribution network, labelled 104.

The first pipe 105 discharges inside the battery 101 through an inlet duct 107 installed for this purpose, whilst, through an outlet duct 108, the corresponding first flow of the quantities of conductive solutions is extracted or forced outside the battery 101.

These quantities conductive solutions, which are either extracted or forced out, have a second concentration "C2" which is different, and normally greater, than the first concentration "C1" and also have a temperature "T2" greater than the temperature "T1", and are, therefore, heated. Therefore the first flow of conductive solution which is extracted by the battery (or by the batteries as specified in the following) has also a concentration "C2" which is different, and normally greater, than the first concentration "C1" and also have a temperature "T2" greater than the temperature "T1", and are, therefore, heated.

This first flow of conductive solution is pumped by a first pump 111 to a correction device delimited overall by the dotted line 110 and which will be described in greater detail below, passing through a second pipe 109.

According to the present invention, the storage vessel 106 has at least one second outlet 114 from which runs a third pipe 115 parallel to the second pipe 109 and larger in diameter than the second pipe 109 to enable the passage of proportionally greater flows.

The third pipe 115 flows into a second pump 116, and serves to integrate with a second flow of conductive solution, by means of the same pump 116, the first flow of conductive solution coming from the battery, or batteries 101, which is sent to the correction device 110. In this manner, the total flow of conductive solution which is treated in the correction device 110 is obtained by the first flow and second flow always constant regardless of the number of batteries 101 under charge. In a possible embodiment, the second pipe 109 and the third pipe 115 converge at a junction point 117, placed immediately upstream of the pump 116. The correction device 110 comprises a filtering unit 112 which serves to filter any impurities which are collected by the conductive solutions inside the battery 101 during charging. A device for continuous density adjustment is fitted downstream of the filtering unit 112 which serves for adjusting and re-titrating the conductive solution. The above-mentioned adjustment device is also known as static continuous mixer-adding device and is labelled 113.

Into the mixer-adding device 113 converge two supply lines 118 and 119 which carry inside the mixer-adding device, in a controlled manner with the regulation devices 130, water (indicated in Figure 2 by H2O) and sulphuric acid (indicated in Figure 2 by H2SO4), respectively. The regulation devices may embodied by modulating valves 130 which enable the introduction of calibrated and proportional fluid flows upon opening of the valve. Therefore, if required, the mixer-adding device 113 may be used to add water and/or sulphuric acid to the total conductive solution in order to correct the concentration of sulphuric acid in the conductive solution after filtration of the conductive solution with the filtering unit 112. Upstream and downstream of the mixer-adding device 113 two devices are installed for measuring the concentrations of sulphuric acid in the conductive solution, labelled 131 and 132, respectively. A cooling unit 120 is fitted downstream of the mixer-adding device 113, for cooling the total conductive solutions when they leave the mixer-adding device 113.

As may be seen in Figure 2, the second pump 116, the filtering unit 112, the static mixer 113 and the cooling unit 120 are connected by a connection pipe labelled 133 which extends from an outlet of the cooling unit 120 to the storage vessel 106.

The method for the cooling and the re-titration of conductive solutions, in particular conductive solutions of batteries 101, is as follows: a preestablished quantity of a conductive solution which has a concentration of sulphuric acid "C1" and a temperature "T1" is placed inside the storage vessel 106.

From this storage vessel 106 a first flow of the conductive solution is introduced into a battery 101. More precisely, the conductive solution is introduced into the battery 101, for example by gravity, by the first pipe 105, through the inlet duct 107 entering the battery.

The battery 101 is in turn placed under charge, that is, connected to an electricity source 104, such as, for example, a conventional domestic or industrial distribution network.

It should be noted that the cooling and re-titrating method described for a single battery 101 is also applicable to a plurality of batteries 101 placed in series and charged simultaneously. Due to the chemical reactions caused by charging, the conductive solution which is already present in the battery 101 has a concentration of sulphuric acid "C2", which is normally more concentrated, and generally different to the concentration "C1", and a temperature "T2" which is higher than the temperature "T1".

The introduction of conductive solution at the temperature "T1" and at the concentration "C1" takes place continuously and, consequently, the conductive solution which has concentration "C2" and temperature "T2" is forced outside the battery 101 through the battery outlet duct 108 and sent through the second pipe 109 to the correction device 110.

However, before reaching the correction device 110, the first flow of conductive solution, which has concentration "C2" and temperature "T2", is mixed with a second flow of conductive solution which has concentration "C1" and temperature "T1" and that, coming from the storage vessel 106, is sent to the junction point 117 through the third pipe 115.

The total conductive solution, coming from the storage vessel 106 and the battery 101, or from the batteries 101, is then filtered by means of the filtering unit 112 and then passed to the mixer-adding device 113 in which the concentration of the conductive solution is corrected, or re-titrated, in order to return to a concentration value substantially equal to the value "C1".

The correction occurs in the mixer-adding device 113 automatically, without the presence of operators.

After the total conductive solution has been corrected in the mixer-adding device 113, the conductive solution is introduced into the cooling unit 120 in which the temperature is lowered to a value close to or equal to the value "T1".

Lastly, the total cooled conductive solution is sent again to the storage vessel 106 through the fourth pipe 133, so that the cooling and correction cycle can continue until the charging of the battery 101 is completed.

An important characteristic of the present invention is that the conductive solution circulates continuously in the two circuits 134 and 135, as specified below.

The conductive solution is circulated by taking it from the vessel 106 and returning it to the same vessel through the two circuits 134, 135 which run in parallel over a part of their course. The first circuit 134 basically comprises the first pipe 105, the battery or the batteries 101, the second pipe 109 and the pump 111, whilst the second circuit 135 comprises the third pipe 115, the pump 116, the fourth pipe 133, the filtering unit 112, the mixer-adding device 113 and the cooling unit 120.

As mentioned above, the first flow of solution coming from the first circuit 134 has a concentration "C2" and a temperature "T2", which are in general different from those of the second circuit 135, which has a concentration "C1" and a temperature T1.

Since the introduction of the first flow of solution coming from the first circuit 134 takes place upstream of the mixer-adding device 113 - and in particular takes place upstream of the pump 116 - the mixer-adding device 113 carries out the overall re-titration, or correction of the concentration, of the total solution.

The pump 111 ensures that the first flow of solution coming from the first circuit 134 is effectively and efficiently introduced into the second circuit 135, and for that purpose the pump 111 must be selected in order to provide a head greater than the head present in the second circuit 135 at the junction point 117 of the two circuits. According to a preferred embodiment of the present invention, the first circuit 134 may comprise a group of circuits, each circuit in turn comprising the first pipe 105, the batteries 101, the second pipe 109 and the pump 111.

Indeed, as will be described in more detail below, the batteries 101 may be subdivided into several groups which are at different charging stages. Since all the pumps 111 of the various groups of batteries 101 lead into the second circuit 135, the pump 116 of the circuit 135 must have a flow rate greater than the overall flow rate of all the pumps 111.

In the second circuit 135 there is in any case a substantially constant circulation achieved by the pump 116.

The fact of having the flow of conductive solution to be treated substantially constant in the circuit 135 enables the correction and the re-titration to be carried out effectively and in real time. The first measurement device 131 fitted upstream of the mixer-adding device 113 measures the current concentration "C1" of the conductive solution which flows overall in the circuit 135. Since the flow of conductive solution is constant, it is possible to calculate easily, quickly and precisely the quantity of water or acid necessary to obtain the "set-point", that is the desired concentration of conductive solution to be introduced into the batteries.

The second measurement device 132, installed downstream of the mixer-adding device 113, checks the concentration of the conductive solution after the correction, and on the basis of the difference with respect to the "set point", or desired concentration, of the conductive solution, modifies the operating factor of the modulating valves 130 that supplies the water and the acid. In a simplified version of the present invention (not illustrated), the second measurement device 132, installed downstream of the mixer-adding device 113, may be omitted, since adjustment of the operating factor of the modulating valves 130 may be obtained by trial and error during the preparation and setting up of the plant.

The entire operation of the plant, and in particular the checking of the concentration of the conductive solution and the operation of the modulating valves 130 for the correction of the concentration, may be performed by a microprocessor control unit (not illustrated), provided with a dedicated software.

The re-titration, or correction of the concentration, of the solution is performed by the mixer-adding device 113 on the solution circulating in the two circuits 134 and 135 in its entirety, whatever the number of batteries 101 being charged in the first circuit 134.

In this respect, it should be noted that the above-mentioned re-titration of the solution does not require large quantities of acid or water either with a single battery 101, or with many batteries 101.

Indeed, in the case of many batteries 101 under charge, the batteries will be subdivided into several groups with different charge start times and, consequently, charging and resting at different times. The subdivision of the batteries to be charged into groups is necessary in order to maintain electricity consumption within certain limits and to not have excessively high electricity consumption peaks.

The concentration of the conductive solution in the batteries follows, in a similar manner, the electrical charging, rest and/or discharge steps of the batteries.

Since the conductive solution increases in density while the batteries 101 are charging and reduces in density while resting or discharging, there will be a group of batteries 101 which provides a conductive solution with a higher density and a group of batteries 101 which provides a conductive solution with a lower density.

Therefore, the conductive solution in circulation will have overall an intermediate concentration between these density values.

In particular, the concentration will depend on the number of batteries 101, that is, the flow of conductive solution supplied by the batteries themsleves, and the electrical state of the batteries: charging, rest or discharging.

In this manner, it is possible to obtain a certain balancing effect of the concentration of the conductive solution. The correction or re-titration carried out by the mixer-adding device 113 does not require large quantities of acid or water even in the above-mentioned case in which there are many or all the batteries which the plant is able to prepare.

Naturally, in the case of a small number of batteries which are all at the same electrical charging stage, the flow, of conductive solution provided by the batteries 101 will be relatively small and, therefore, large quantities of acid or water will not be required for the correction mixer-adding device 113 in this case either.

For the above-mentioned reasons, the size of the mixer-adding device 113 will be selected to provide corrections to only a certain number of batteries, and this number will be certainly less than the maximum number of batteries which may be processed by the plant.

As already indicated previously, the mixer-adding device 113, even if it is designed to correct a flow of conductive solution only for a small number of batteries, is still able to treat the conductive solution of all the batteries even when the plant operates with the maximum number of batteries which may be processed in the plant, as the batteries are subdivided into groups at different charging stages. With the present invention, the cooling and re-titration plant is altogether smaller and more compact than prior art plants which correct the conductive solution in the collection and/or storage vessels, and it is also less costly to construct and to operate as it is fully automatic. The quantity of conductive solution in circulation is also much less as the collection and/or storage vessels of the prior art plants are not necessary, and it is sufficient to have a single storage vessel which may have a relatively small volume compared to the number of batteries treated.

## Claims

1. A plant (100) for the cooling and the re-titration of conductive solutions, of lead-acid batteries (101) during charging, comprising:
- a first circuit (134) and a second circuit (135) for the continuous circulation of a conductive solution, which circuits (134, 135) are both connected to means (106) for storing the conductive solution containing an acid solution at a first concentration (C1) and at a first temperature (T1);
- said first circuit (134) of the conductive solution comprising:
first connection means (105) between the storage means (106) and an inlet duct (107) to the batteries (101);
second connection means (109, 111) between an outlet duct (108) of the batteries (101) and the second circuit (135), for extracting from the batteries (101) a first flow of quantities of a conductive solution having a second concentration (C2) and a second temperature (T2) different from the first concentration (C1) and the first temperature (T1);
- said second circuit (135) of the conductive solution comprising:
means (110) for correcting the conductive solutions;
third connection means (115, 116) fitted between the storage means (106) and the correction means (110), which extracts from the storage means (106) a second flow of conductive solution containing acid solution at the first concentration (C1) and at the first temperature (T1);
**characterized in that**:
the second connection means (109, 111) of said first circuit (134) and the third connection means (115, 116) of said second circuit'(135) converge at a junction point (117) placed upstream of the correction means (110) configured to produce a total flow of conductive solution which crosses the correction means (110) with a constant flow rate.

2. The plant according to claim 1, wherein the second connection means comprise a first pump (111).

3. The plant according to any of the claims from 1 to 2, wherein the second connection means comprise a plurality of first pumps (111).

4. The plant according to any of the claims from 1 to 3, wherein the third connection means comprise a second pump (116).

5. The plant according to claim 4, wherein the first pump (111), or the plurality of first pumps (111), has, or have, a head greater than the head present at the junction point (117).

6. The plant according to claim 4 or 5, wherein the junction point (117) is upstream of the second pump (116).

7. The plant according to any of the claims from 4 to 6, wherein the second pump (116) has a greater flow rate than the flow rate of the first pump (111), or the second pump (116) has a greater flow rate than the overall flow rate of the plurality of first pumps (111).

8. The plant according to any of the claims from 1 to 7, wherein the correction means (110) comprise, connected together by pipes: the filtration means (112); the continuous mixing-adding means (113, 130) for correcting the second concentration (C2); the cooling means (120) of the second temperature; the fourth connection means (133) fitted between the cooling means (120) and the storage means (106).

9. The plant according to claim 8, wherein the continuous mixing means comprise a continuous density adjustment device, known as static mixer-adding device (113).

10. The plant according to claim 9, wherein a concentration measurement device (131) is fitted upstream of the static mixer-adding device (113).

11. The plant according to claim 9 or 10, wherein a concentration measurement device (132) is fitted downstream of the static mixer-adding device (113).

12. The plant according to any of the claims from 9 to 11, wherein the continuous density adjustment device comprises adjustable flow rate means (130) for adding acid and/or solvent liquid.

13. The plant according to any of the claims from 9 to 12, wherein the continuous mixing means are controlled by microprocessor means.

## Patentansprüche

1. Anlage (100) zur Kühlung und Neutitration von leitenden Flüssigkeiten für Blei-Säure-Akkumulatoren (101) in der Aufladephase, die Folgendes umfasst:
- ein erster Kreis (134) und ein zweiter Kreis (135) für das beständige Zirkulieren einer leitenden Flüssigkeit, beide Kreise (134, 135) sind mit Speichermitteln (106) der leitenden Flüssigkeit, die eine gelöste Säure in einer ersten Konzentration (C1) enthält und eine erste Temperatur (T1) besitzt, verbunden;
- der erste Kreis (134) der leitenden Flüssigkeit umfasst Folgendes:
erste Anschlussmittel (105) zwischen den Speichermitteln (106) und einer Eingangsleitung (107) zu den Akkumulatoren (101);
zweite Anschlussmittel (109, 111) zwischen einer Ausgangsleitung (108) der Batterien (101) und dem zweiten Kreis (135), um den Batterien (101) einen ersten Mengenfluss einer leitenden Flüssigkeit in einer zweiten Konzentration (C2) und mit einer zweiten Temperatur (T2), die sich von der ersten Konzentration (C1) und der ersten Temperatur (T1) unterscheiden, zu entnehmen;
- der zweite Kreis (135) der leitenden Flüssigkeit umfasst Folgendes:
Korrekturmittel (110) für die leitenden Flüssigkeiten;
dritte Anschlussmittel (115, 116), die zwischen den Speichermitteln (106) und den Korrekturmitteln (110) liegen und den Speichermitteln (106) einen zweiten Fluss der leitenden Lösung entnehmen, die eine saure Lösung in einer ersten Konzentration (C1) und mit einer ersten Temperatur (T1) enthält;
**dadurch gekennzeichnet, dass**:
die zweiten Anschlussmittel (109, 111) des ersten Kreises (134) und die dritten Anschlussmittel (115, 116) des zweiten Kreises (135) zu einem Vereinigungspunkt (117) fließen, der vor den Korrekturmitteln (110) liegt, die so konfiguriert sind, dass sie einen Gesamtfluss der leitenden Lösung erzeugen, der die Korrekturmittel (110) mit einer konstanten Fließgeschwindigkeit durchströmt.

2. Anlage gemäß Anspruch 1, wobei die zweiten Anschlussmittel eine erste Pumpe (111) umfassen.

3. Anlage gemäß einem beliebigen Anspruch von 1 bis 2, wobei die zweiten Anschlussmittel eine Vielzahl von ersten Pumpen (111) umfassen.

4. Anlage gemäß einem beliebigen Anspruch von 1 bis 3, wobei die dritten Anschlussmittel eine zweite Pumpe (116) umfassen.

5. Anlage gemäß Anspruch 4, wobei eine erste Pumpe (111) oder eine Vielzahl von ersten Pumpen (111) eine größere Förderhöhe als die am Vereinigungspunkt (117) vorliegende Förderhöhe besitzt oder besitzen.

6. Anlage gemäß Anspruch 4 oder 5, bei welcher der Vereinigungspunkt (117) vor der zweiten Pumpe (116) liegt,

7. Anlage gemäß einem beliebigen Anspruch von 4 bis 6, wobei die zweite Pumpe (116) einen höheren Durchsatz als die erste Pumpe (111) oder die zweite Pumpe (116) einen höheren Durchsatz als der Gesamtdurchsatz der Vielzahl erster Pumpen (111) hat.

8. Anlage gemäß einem beliebigen Anspruch von 1 bis 7, wobei die Korrekturmittel (110) untereinander mit Leitungen verbunden sind und Folgendes umfassen: Filtermittel (112); Misch-Additionsmittel (113, 130) zum Dauereinsatz, die zur Korrektur der zweiten Konzentration (C2) bereit gestellt werden; Kühlmittel (120) für die zweite Temperatur; vierte Anschlussmittel (133), die sich zwischen den Kühlmitteln (120) und den Speichermitteln (106) befinden.

9. Anlage gemäß Anspruch 8, wobei die Dauermischmittel eine Vorrichtung umfassen, die im Dauerbetrieb die Dichte anpasst und auch als statisches Misch-Additionswerk (113) bekannt ist.

10. Anlage gemäß Anspruch 9, wobei sich vor dem statischen Misch-Additionswerk (113) eine Vorrichtung zur Messung (131) der Konzentration befindet.

11. Anlage gemäß Anspruch 9 oder 10, wobei sich hinter dem statischen Misch-Additionswerk (113) eine Vorrichtung zur Messung (132) der Konzentration befindet.

12. Anlage gemäß einem beliebigen der Ansprüche von 9 bis 11, wobei die Vorrichtung zur dauernden Anpassung der Dichte Mittel mit modulierbarem Durchsatz (130) zur Addition von Säure und/oder Lösungsflüssigkeit umfasst.

13. Anlage gemäß einem beliebigen der Ansprüche von 9 bis 12, wobei die Dauermischmittel von Mikroprozessoren gesteuert werden.

## Revendications

1. Installation (100) per le refroidissement et le retitrage de solutions conductrices, d'accumulateurs (101) au plomb-acide en phase de charge, comprenant :
- un premier circuit (134) et un deuxième circuit (135) pour la circulation continue d'une solution conductrice, lesquels circuits (134, 135) sont tous deux reliés à des moyens d'accumulation (106) de la solution conductrice contenant un acide dissout dans une première concentration (C1) et ayant une première température (T1) ;
- ledit premier circuit (134) de la solution conductrice comprenant :
des premiers moyens de raccordement (105) entre les moyens d'accumulation (106) et un conduit d'entrée (107) sur les accumulateurs (101) ;
des deuxièmes moyens de raccordement (109, 111) entre un conduit de sortie (108) des batteries (101) et le deuxième circuit (135), pour extraire des batteries (101) un premier flux de quantité d'une solution conductrice ayant une deuxième concentration (C2) et une deuxième température (T2) différentes de la première concentration (C1) et de la première température (T1) ;
- ledit deuxième circuit (135) de la solution conductrice comprenant :
des moyens de correction (110) des solutions conductrices ;
des troisièmes moyens de raccordement (115, 116) agencés entre les moyens d'accumulation (106) et les moyens de correction (110), qui extraient des moyens d'accumulation (106) un deuxième flux de solution conductrice contenant une solution acide à la première concentration (C1) et à la première température (T1) ;
**caractérisé en ce que** :
les deuxièmes moyens de raccordement (109, 111) dudit premier circuit (134) et les troisièmes moyens de raccordement (115, 116) dudit deuxième circuit (135) confluent en un point de jonction (117) placé en amont des moyens de correction (110) configurés pour produire un flux total de solution conductrice qui traverse les moyens de correction (110) avec une vitesse d'écoulement constante.

2. Installation selon la revendication 1, dans laquelle les deuxièmes moyens de raccordement comprennent une première pompe (111).

3. Installation selon l'une quelconque des revendications 1 à 2, dans laquelle les deuxièmes moyens de raccordement comprennent une pluralité de premières pompes (111).

4. Installation selon l'une quelconque des revendications 1 à 3, dans laquelle les troisièmes moyens de raccordement comprennent une deuxième pompe (116).

5. Installation selon la revendication 4, dans laquelle la première pompe (111), ou la pluralité de premières pompes (111), a, ou ont, une hauteur totale supérieure à la hauteur totale présente dans le point de jonction (117).

6. Installation selon la revendication 4 o 5, dans laquelle le point de jonction (117) est en amont de la deuxième pompe (116).

7. Installation selon l'une quelconque des revendications 4 à 6, dans laquelle la deuxième pompe (116) a un débit supérieur au débit de la première pompe (111), ou la deuxième pompe (116) a un débit supérieur au débit global de la pluralité de premières pompes (111).

8. Installation selon l'une quelconque des revendications 1 à 7, dans laquelle les moyens de correction (110) comprennent, reliés entre eux avec des lignes de conduit : des moyens de filtration (112) ; des moyens de mélange-addition (113, 130) en continu prédisposés pour corriger la deuxième concentration (C2) ; des moyens de refroidissement (120) de la deuxième température ; des quatrièmes moyens de raccordement (133) agencés entre les moyens de refroidissement (120) et les moyens d'accumulation (106).

9. Installation selon la revendication 8, dans laquelle les moyens de mélange en continu comprennent un dispositif d'ajustement en continu de densité, connu comme mélangeur-additionneur statique (113).

10. Installation selon la revendication 9, dans laquelle, en amont du mélangeur-additionneur statique (113), est agencé un dispositif détecteur (131) de concentration.

11. Installation selon la revendication 9 o 10, dans laquelle, en aval du mélangeur-additionneur statique (113), est agencé un dispositif détecteur (132) de concentration.

12. Installation selon l'une quelconque des revendications 9 à 11, dans laquelle le dispositif d'ajustement en continu de densité comprend des moyens à débit modulable (130) pour l'ajout d'acide et/ou de liquide solvant.

13. Installation selon l'une quelconque des revendications 9 à 12, dans laquelle les moyens de mélange en continu sont contrôlés par des moyens à microprocesseur.
